# DEMANDE DE BREVET EUROPEEN

(11) **EP 2 933 444 A1**
(43) Date de publication de la demande: **21.10.2015**
(21) Numéro de dépôt: 15305403.6
(22) Date de dépôt: 19.03.2015
(51) Int. Cl.: F01K 23/06, F01K 25/08

(54) **Dispositif de contrôle d'un circuit fermé fonctionnant selon un cycle de Rankine et procédé utilisant un tel dispositif.**

(30) Priorité: 16.04.2014 FR 1453388
(71) Demandeur: IFP Énergies nouvelles, 92852 Rueil-Malmaison Cedex (FR)
(72) Inventeur: Smague, Pascal, 92500 Rueil-Malmaison (FR)

(57) **Abrégé**

La présente invention concerne un dispositif de contrôle d'un circuit fermé (10) fonctionnant selon un cycle de Rankine, ledit circuit comprenant une pompe de compression/circulation (12) du fluide sous forme liquide, un échangeur de chaleur (20) balayé par une source chaude (C) pour l'évaporation dudit fluide, des moyens de détente (32) du fluide sous forme vapeur, un échangeur de refroidissement (44) balayé par une source froide (F) pour la condensation du fluide de travail, un réservoir de fluide de travail (50), et des conduites de circulation du fluide de travail (60, 62, 64 ,66, 68).

Selon l'invention, le réservoir (48) est relié à un dispositif de régulation de pression (52, 54).

## Description

La présente invention se rapporte à un dispositif de contrôle d'un circuit fermé fonctionnant selon un cycle de Rankine ainsi qu'à un procédé utilisant un tel dispositif.

Comme cela est largement connu, le cycle de Rankine est un cycle thermodynamique par lequel de la chaleur provenant d'une source de chaleur externe est transmise à un circuit fermé qui contient un fluide de travail.

Il existe de nombreux types de circuit à cycle de Rankine et plus particulièrement ceux qui font appel un changement de phase (liquide/vapeur) d'un fluide de travail.

Ce type de cycle se décompose généralement en une étape durant laquelle le fluide de travail utilisé sous forme liquide, est comprimé de manière isentropique, suivie d'une étape où ce fluide liquide comprimé est chauffé et vaporisé au contact d'une source de chaleur.

Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe-compresseur pour faire circuler et comprimer le fluide sous forme liquide, un évaporateur qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie mécanique ou électrique, et un condenseur grâce auquel la chaleur contenue dans la vapeur est cédée à une source froide, généralement de l'air extérieur qui balaye ce condenseur, pour transformer cette vapeur en un fluide sous forme liquide.

Dans ce type de circuit, le fluide utilisé est généralement de l'eau mais d'autres types de fluide, par exemple des fluides organiques ou des mélanges de fluides organiques, peuvent également être utilisés.

A titre d'exemple, ces fluides organiques peuvent être du butane, de l'éthanol, des hydrofluorocarbures, de l'ammoniac, du dioxyde de carbone...

Il est également connu, notamment par le document FR 2 884 555, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

Le circuit à cycle de Rankine permet ainsi d'améliorer le rendement du moteur et participe à la réduction de la consommation et des émissions polluantes de celui-ci.

Dans le cadre des applications mobiles, notamment dans le domaine du transport, l'accès à une source froide pour la condensation du fluide de travail du circuit à cycle de Rankine n'est pas toujours évidente et, dans certains cas, peut être coûteuse énergétiquement.

De plus, lorsqu'on utilise un fluide de travail à basse température d'ébullition, comme les fluides organiques (HFC notamment), pour réaliser un ORC (Organic Rankine Cycle - cycle de Rankine organique), l'atteinte d'une condensation voire d'un sous-refroidissement du fluide en sortie du condenseur n'est pas garanti. En l'absence d'un sous-refroidissement suffisant du fluide, un risque certain de cavitation en entrée de la pompe-compresseur est à prévoir en cas de baisse brutale de la pression liée à l'aspiration du fluide à l'entrée de la pompe.

Pour garantir la non cavitation de la pompe sur le circuit, il est déjà connu, notamment par le brevet US 7174732, de gérer le sous-refroidissement par la mise en place d'une ventilation forcée au niveau du condenseur permettant d'accroitre sa puissance d'échange et d'abaisser la température du fluide en sortie.

Cette solution a pour inconvénient non négligeable d'être pénalisante énergétiquement car elle entraîne une consommation énergétique importante associée à la ventilation, ce qui est nuisible au rendement du cycle de récupération Rankine.

La présente invention se propose de remédier aux inconvénients ci-dessus en proposant une alternative à cette baisse de la température tout en garantissant une absence de risque de cavitation en entrée de la pompe même en fonctionnement transitoire de celle-ci.

A cet effet, l'invention concerne un dispositif de contrôle d'un circuit fermé fonctionnant selon un cycle de Rankine, ledit circuit comprenant une pompe de compression/circulation du fluide sous forme liquide, un échangeur de chaleur balayé par une source chaude pour l'évaporation dudit fluide, des moyens de détente du fluide sous forme vapeur, un échangeur de refroidissement balayé par une source froide pour la condensation du fluide de travail, un réservoir de fluide de travail, et des conduites de circulation du fluide de travail, caractérisé en ce que le réservoir est relié à un dispositif de régulation de pression.

Le dispositif de régulation de pression peut comprendre un détendeur-régulateur de pression associé à un moyen de décharge.

Le moyen de décharge peut comprendre une soupape.

Le détendeur-régulateur de pression peut être relié, d'une part, au réservoir et, d'autre part, à une source de pression.

La source de pression peut comprendre de l'air ou de l'azote.

Le réservoir peut comprendre une partie expansible pour recevoir le ciel du réservoir.

L'invention concerne également un procédé de contrôle d'un circuit fermé fonctionnant selon un cycle de Rankine, ledit circuit comprenant une pompe de compression/circulation du fluide sous forme liquide, un échangeur de chaleur balayé par une source chaude pour l'évaporation dudit fluide, des moyens de détente du fluide sous forme vapeur, un échangeur de refroidissement balayé par une source froide pour la condensation du fluide de travail, un réservoir de fluide de travail, et des conduites de circulation du fluide de travail, caractérisé en ce qu'il consiste à réguler la pression à l'intérieur du réservoir.

Le procédé peut consister à tarer un détendeur-régulateur, relié au réservoir, à une valeur telle que la pression de tarage soit aux environs de la pression de saturation du fluide en sortie de l'échangeur de refroidissement.

Le procédé peut consister, lors de l'arrêt de fonctionnement du circuit, à produire une pression supérieure à la pression atmosphérique de manière à prévenir toute introduction d'air extérieur.

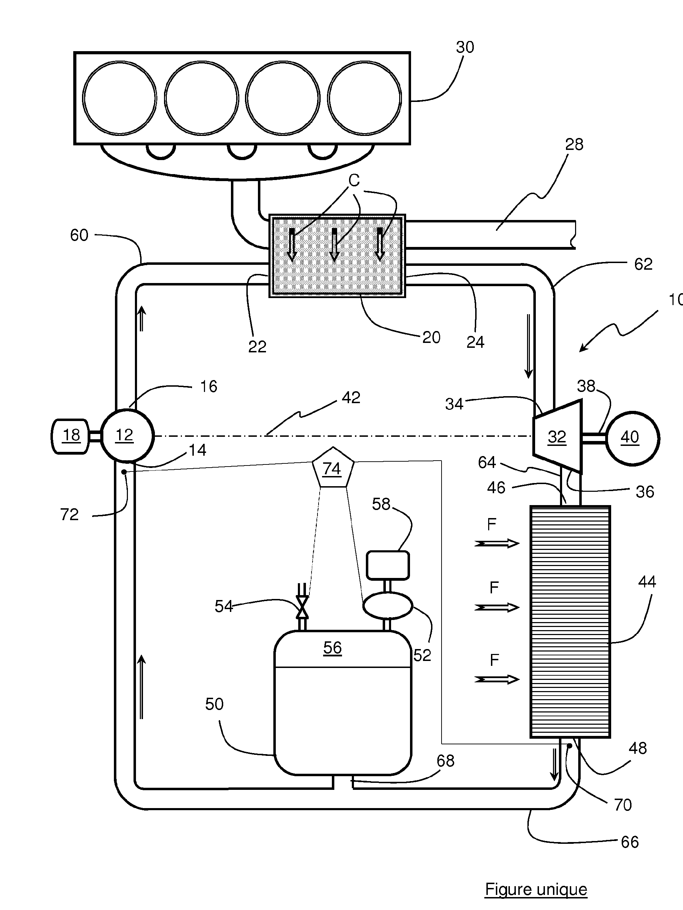

Les autres caractéristiques et avantages de l'invention vont apparaître à la lecture de la description qui va suivre, donnée à titre uniquement illustratif et non limitatif, et à laquelle est annexée la figure unique qui montre un dispositif de contrôle d'un circuit fermé fonctionnant selon un cycle de Rankine.

Sur cette figure, le circuit fermé à cycle de Rankine 10 comprend une pompe volumétrique de compression et de circulation 12 d'un fluide de travail, dénommée pompe dans la suite de la description pour des raisons de simplification, avec une entrée 14 du fluide de travail sous forme liquide et une sortie 16 de ce fluide de travail également sous forme liquide mais comprimé sous une pression élevée. Cette pompe est avantageusement entraînée en rotation par un moteur électrique 18.

Le fluide de travail utilisé est, ici uniquement à titre d'exemple, un fluide dénommé R245fa (C₃H₃F₅) de la société Honeywell ou HFE7100 (C₅H₃F₉O) de la société 3M ou R365mfc (C₄H₅F₅) de la société Solvay.

Ce circuit comporte aussi un échangeur de chaleur 20, dénommé évaporateur, traversé par le fluide de travail comprimé entre une entrée 22 de ce fluide liquide et une sortie 24 au travers de laquelle le fluide de travail ressort de cet évaporateur sous forme de vapeur comprimée. Cet évaporateur est parcouru par une source chaude (Flèche C) provenant des gaz d'échappement circulant dans la ligne d'échappement 28 d'un moteur à combustion interne 30 et plus particulièrement d'un moteur pour véhicule automobile.

Ce circuit comporte également une machine de détente 32 recevant par son entrée 34 le fluide de travail sous forme de vapeur comprimée à haute pression, ce fluide ressortant par la sortie 36 de cette machine sous forme de vapeur détendue à basse pression.

Avantageusement, cette machine de détente peut être sous la forme d'une turbine de détente dont le rotor est entraîné en rotation par le fluide de travail sous forme de vapeur en entraînant un arbre de liaison 38. De manière préférentielle, cet arbre permet de transmettre l'énergie récupérée à tout dispositif transformateur, comme par exemple une génératrice électrique 40.

Cette machine de détente peut être également une machine à piston alternatif ou à piston rotatif dont l'arbre de sortie est relié au dispositif transformateur.

Comme illustré en traits pointillés sur la figure, cette machine de détente peut également comporter un arbre d'entraînement 42 qui relie le rotor de cette machine au rotor de la pompe. Dans cette configuration, le moteur 18 de la pompe peut avantageusement être supprimé et le rotor de cette pompe est alors entrainé par la rotation du rotor de la turbine auquel il est lié par l'arbre 42.

Le circuit comporte encore un échangeur de refroidissement 44, ou condenseur, avec une entrée 46 pour la vapeur basse pression détendue et une sortie 48 pour le fluide de travail transformé sous forme liquide après son passage dans ce condenseur. Ce condenseur est balayé par une source froide, généralement un flux d'air froid (Flèche F) à température ambiante, de manière à refroidir la vapeur détendue pour qu'elle se condense et se transforme en un liquide. Bien entendu, toute autre source froide de refroidissement, comme de l'eau, peut être utilisé pour assurer la condensation de la vapeur.

Ce circuit comporte également un réservoir fermé 50 qui permet de conserver le fluide de travail à l'état liquide.

Ce réservoir porte un dispositif de régulation de pression qui comprend un détendeur-régulateur de pression 52 associé à un moyen de décharge sous la forme d'une soupape de décharge 54.

Le détendeur-régulateur est relié, d'un côté, au ciel 56, généralement de l'air, présent en partie haute du réservoir 50 et, d'un autre côté, à une source de pression 58 qui est de l'air ou de l'azote sous pression. Ce détendeur-régulateur et la soupape permettent ainsi d'assurer une pressurisation contrôlée de l'intérieur du réservoir et plus particulièrement de son ciel.

Les différents éléments du circuit sont reliés entre eux par des conduites de circulation de fluide 60, 62, 64, 66 et 68 permettant de relier la pompe avec l'évaporateur (conduite d'évaporateur 60), l'évaporateur avec la turbine (conduite de turbine 62), cette turbine avec le condenseur (conduite de condenseur 64), le condenseur avec la pompe (conduite de pompe 66), et cette conduite de pompe au réservoir (conduite de réservoir 68).

Additionnement, le circuit comporte un capteur de température 70 placé sur la conduite de réservoir 68 à la sortie du condenseur 44 et un capteur de pression 70 sur la conduite 68 à l'entrée de la pompe 14.

Il est également prévu une unité de commande 74 du détendeur-régulateur, et éventuellement de la soupape de décharge 54, et qui reçoit des informations de ces capteurs ainsi que de tous autres capteurs présents dans le circuit.

Durant le fonctionnement du circuit, l'unité 74 commande le détendeur-régulateur 52 avec une valeur de tarage telle que la pression dans le réservoir 50 atteigne la pression de saturation du fluide de travail en sortie du condenseur 44 avec une marge de sécurité de sous-refroidissement (10°C par exemple).

A titre uniquement d'exemple, pour une température mesurée par le capteur 70 en sortie du condenseur de 85°C correspondant à une pression de saturation de 4bar du fluide de travail, dans le cas du R365mfc par exemple, ce détendeur-régulateur 52 est commandé pour avoir une valeur de tarage à une pression de 5,2bar équivalent à la pression de saturation du fluide à une température de 95°C.

Ainsi configuré, le régulateur détendeur assure à chaque instant que le fluide en entrée de la pompe dispose d'un niveau de sous-refroidissement suffisant (10°C dans l'exemple) avec l'absence quasi totale de fluide en phase vapeur ou gaz, ce qui permet d'éviter tout risque de cavitation au niveau de la pompe.

En fonctionnement transitoire de la pompe, le régulateur détendeur 52 associé à la soupape de décharge 54 permet de réguler la pression en entrée de cette pompe. Ce fonctionnement transitoire de la pompe survient lors du fonctionnement transitoire de la source de chaleur (augmentation ou diminution de l'énergie thermique) nécessitant une adaptation en continu du débit de fluide caloporteur dans le cycle de Rankine pour maintenir stable se température en sortie de l'évaporateur.

Ainsi, lorsque la pompe augmente son débit circulé, le niveau du fluide de travail présent dans le réservoir 50 va diminuer. Cette baisse du niveau entraine alors une baisse de la pression dans le ciel 56 du réservoir. La baisse de pression est alors compensée par la mise en action du détendeur-régulateur qui va admettre dans ce réservoir de l'air ou de l'azote sous pression jusqu'à atteindre le niveau de pression souhaitée à l'entrée de la pompe afin d'être en condition favorable de condensation en sortie du condenseur

Inversement, lorsque la pompe 12 réduit son débit circulé, le retour de fluide de travail du condenseur 44 vers le réservoir 50 est plus important que le départ de fluide de ce réservoir vers la pompe, le niveau dans le réservoir va alors augmenter en entraînant une augmentation de la pression dans le ciel 56.

La soupape de décharge est alors commandée en ouverture, soit par l'unité 74, soit de manière automatique, pour évacuer une partie du fluide gazeux du ciel en limitant ainsi l'augmentation de la pression dans le réservoir, ce qui pourrait nuire au rendement du cycle de récupération.

Bien entendu et cela sans sortir du cadre de l'invention, il peut être prévu de réaliser un réglage variable de la pression du détendeur-régulateur qui soit asservi à la pression de saturation de la température du fluide mesurée en sortie du condenseur si celle-ci est variable.

Egalement, il peut être prévu d'utiliser un réservoir avec un ciel "expansible", par exemple de type vessie, pour isoler le fluide de travail du fluide de pressurisation afin d'éviter un rejet à l'atmosphère, par la soupape de décharge, du fluide de travail sous forme vapeur si celui-ci est nocif pour l'environnement.

Avec ce dispositif de régulation, on est assuré d'avoir un réglage optimal de la pression dans la partie Basse Pression du circuit (conduite 66, conduite 68 et réservoir 52). Ceci permet d'avoir une bonne condensation du fluide de travail et donc une absence de risque de cavitation pour la pompe tout en limitant la baisse de rendement du cycle de récupération inhérent à l'augmentation de la pression dans la partie Basse Pression du circuit.

En outre, lorsque le fonctionnement du circuit est arrêté, les éléments de ce circuit se refroidissent jusqu'à à la température de son environnement extérieur, qui, dans certains cas, peut être inférieur à zéro degré.

Dans ces conditions, la pression dans le circuit s'établira, sans dispositif particulier, à la pression de vapeur saturante du fluide à cette température.

Pour certains fluides caloporteurs, la pression de vapeur saturante sera largement sub-atmosphérique engendrant un risque d'intrusion d'air dans le circuit lors d'arrêts prolongés. Afin de se prémunir de cet effet pouvant nuire au fonctionnement du circuit de récupération sur un redémarrage, le réservoir sera pressurisé à une pression légèrement supérieure à la pression atmosphérique par l'intermédiaire du détendeur-régulateur, de sorte qu'aucune intrusion d'air extérieur ne puisse se produire.

## Revendications

1. Dispositif de contrôle d'un circuit fermé (10) fonctionnant selon un cycle de Rankine, ledit circuit comprenant une pompe de compression/circulation (12) du fluide sous forme liquide, un échangeur de chaleur (20) balayé par une source chaude (C) pour l'évaporation dudit fluide, des moyens de détente (32) du fluide sous forme vapeur, un échangeur de refroidissement (44) balayé par une source froide (F) pour la condensation du fluide de travail, un réservoir de fluide de travail (50), et des conduites de circulation du fluide de travail (60, 62, 64 ,66, 68), **caractérisé en ce que** le réservoir (48) est relié à un dispositif de régulation de pression (52, 54).

2. Dispositif selon la revendication 1, **caractérisé en ce que** le dispositif de régulation de pression comprend un détendeur-régulateur de pression (52) associé à un moyen de décharge (54).

3. Dispositif selon la revendication 2, **caractérisé en ce que** le moyen de décharge comprend une soupape (54).

4. Dispositif selon la revendication 2 ou 3, **caractérisé en ce que** le détendeur-régulateur de pression (52) est relié, d'une part, au réservoir (50) et, d'autre part, à une source de pression (58).

5. Dispositif selon la revendication 4, **caractérisé en ce que** la source de pression (58) comprend de l'air ou de l'azote.

6. Dispositif selon l'une des revendications précédentes, **caractérisé en ce que** le réservoir comprend une partie expansible pour recevoir le ciel (56) du réservoir.

7. Procédé de contrôle d'un circuit fermé (10) fonctionnant selon un cycle de Rankine, ledit circuit comprenant une pompe de compression/circulation (12) du fluide sous forme liquide, un échangeur de chaleur (20) balayé par une source chaude (C) pour l'évaporation dudit fluide, des moyens de détente (32) du fluide sous forme vapeur, un échangeur de refroidissement (44) balayé par une source froide (F) pour la condensation du fluide de travail, un réservoir de fluide de travail (50), et des conduites de circulation du fluide de travail (60, 62, 64 ,66, 68), **caractérisé en ce qu'**il consiste à réguler la pression à l'intérieur du réservoir.

8. Procédé selon la revendication 7, caractérisé en qu'il consiste à tarer un détendeur-régulateur (52), relié au réservoir (50), à une valeur telle que la pression de tarage soit aux environs de la pression de saturation du fluide en sortie de l'échangeur de refroidissement (44).

9. Procédé selon la revendication 7, caractérisé en qu'il consiste, lors de l'arrêt de fonctionnement du circuit, à produire une pression supérieure à la pression atmosphérique de manière à prévenir toute introduction d'air extérieur.
